# EUROPEAN PATENT APPLICATION

(11) **EP 4 397 883 A1**
(43) Date of publication of application: **10.07.2024**
(21) Application number: 22864558.6
(22) Date of filing: 30.08.2022
(51) Int. Cl.: F16D 65/02

(54) **CALIPER BODY FOR VEHICULAR DISC BRAKE**

(30) Priority: 31.08.2021 JP 2021141946
(71) Applicant: Hitachi Astemo, Ltd., Ibaraki 312-8503 (JP)
(72) Inventor: ATSUTA Daiki, Hitachinaka-shi, Ibaraki 312-8503 (JP)
(74) Representative: Hoefer & Partner Patentanwälte mbB
(86) International application number: PCT/JP2022/032574
(87) International publication number: WO 2023/032976

(57) **Abstract**

In a caliper body for a vehicular disc brake capable of improving rigidity by a reinforcing rib while preventing an increase in weight, a pair of first reinforcing ribs 28, 28 extending from a side of a cylinder portion to a disc turn-out side are provided on a disc radial outer side and a disc radial inner side of an opposing disc rotor side surface 21h of a turn-out side body portion 21g of a caliper body 3. A pair of second reinforcing ribs 29, 29 extending from the side of the cylinder portion to a disc turn-in side are provided on a disc radial outer side and a disc radial inner side of the opposing disc rotor side surface 21h of the turn-in side body portion 21j. The opposing disc rotor side surface 21h between the pair of first reinforcing ribs 28, 28 is provided with a first thinning portion 21i serving as a thin-walled portion, and the opposing disc rotor side surface 21h between the pair of second reinforcing ribs 29, 29 is provided with a second thinning portion 21k serving as a thin-walled portion.

## Description

### Technical Field

The present invention relates to a caliper body for a vehicular disc brake, and more particularly to a caliper body of a vehicular disc brake including a reinforcing rib.

### Background Art

In the related art, in a vehicular disc brake, in order to prevent a bottom wall of a cylinder hole from swelling out to an opposing disc rotor side when a hydraulic pressure is supplied to a hydraulic pressure chamber formed between the cylinder hole and a piston during braking, a reinforcing rib is provided in a caliper body (see, for example, PTL 1 and PTL 2).

### Citation list

### Patent Literature

PTL 1: JP2003-65368A
PTL 2: JP4818307B

### Summary of Invention

### Technical Problem

However, in the above PTL 1 and PTL 2, the reinforcing rib is formed by cladding the caliper body, and a weight of the caliper body is increased although rigidity of the caliper body can be ensured.

Therefore, an object of the invention is to provide a caliper body for a vehicular disc brake capable of improving rigidity of the caliper body by a reinforcing rib while preventing an increase in weight.

### Solution to Problem

In order to achieve the above object, in a caliper body for a vehicular disc brake according to the invention, the caliper body being provided across an outer periphery of a disc rotor, and including an action portion including a cylinder portion into which a piston is inserted, the action portion being arranged on a side portion of the disc rotor, the action portion includes a turn-out side body portion extending from the cylinder portion to a disc turn-out side when a vehicle is moving forward, and a turn-in side body portion extending from the cylinder portion to a disc turn-in side when the vehicle is moving forward, a pair of disc turn-out side reinforcing ribs extending from a side of the cylinder portion to the disc turn-out side are provided on a disc radial outer side and a disc radial inner side of an opposing disc rotor side surface of the turn-out side body portion, a pair of disc turn-in side reinforcing ribs extending from the side of the cylinder portion to the disc turn-in side are provided on a disc radial outer side and a disc radial inner side of an opposing disc rotor side surface of the turn-in side body portion, and thin-walled portions are provided on the opposing disc rotor side surface between the pair of disc turn-out side reinforcing ribs and on the opposing disc rotor side surface between the pair of disc turn-in side reinforcing ribs, respectively.

It is preferable that the disc turn-out side reinforcing rib and the disc turn-in side reinforcing rib are formed continuously to the cylinder portion, and an opposing disc rotor side surface of the disc turn-out side reinforcing rib and an opposing disc rotor side surface of the disc turn-in side reinforcing rib are formed on the same plane as an opposing disc rotor side surface of the cylinder portion or formed closer to a disc rotor side than the opposing disc rotor side surface of the cylinder portion.

It is preferable that the caliper body is formed by coupling, by a bridge portion straddling an outer periphery of the disc rotor, a pair of the action portions arranged on both side portions of the disc rotor.

It is preferable that the turn-out side body portion and the turn-in side body portion of the action portion are each provided with a vehicle body attachment portion, and the vehicle body attachment portion includes a bolt insertion hole in a disc radial direction through which a vehicle body attachment bolt is inserted.

It is preferable that the action portion is provided with a vehicle body attachment portion, and the vehicle body attachment portion includes a bolt insertion hole in a disc axial direction through which a vehicle body attachment bolt is inserted.

### Advantageous Effects of Invention

According to the caliper body for a vehicular disc brake according to the invention, since the pair of disc turn-out side reinforcing ribs extending from the side of the cylinder portion to the disc turn-out side are provided on the disc radial outer side and the disc radial inner side of the opposing disc rotor side surface of the turn-out side body portion, and the pair of disc turn-in side reinforcing ribs extending from the side of the cylinder portion to the disc turn-in side are provided on the disc radial outer side and the disc radial inner side of the opposing disc rotor side surface of the turn-in side body portion, rigidity of the caliper body can be improved, and the cylinder portion can be prevented from swelling out to the opposing disc rotor side during braking. Further, since the thin-walled portions are provided on the opposing disc rotor side surface between the pair of disc turn-out side reinforcing ribs and on the opposing disc rotor side surface between the pair of disc turn-in side reinforcing ribs, respectively, an increase in weight of the caliper body can be prevented.

Since the disc turn-out side reinforcing rib and the disc turn-in side reinforcing rib are formed continuously to the cylinder portion, and the opposing disc rotor side surface of the disc turn-out side reinforcing rib and the opposing disc rotor side surface of the disc turn-in side reinforcing rib are formed on the same plane as the opposing disc rotor side surface of the cylinder portion or formed closer to the disc rotor side than the opposing disc rotor side surface of the cylinder portion, the rigidity can be ensured while reducing the weight without increasing a size of the caliper body.

Since the caliper body is formed by coupling, by the bridge portion straddling the outer periphery of the disc rotor, the pair of the action portions arranged on the both side portions of the disc rotor, the rigidity can be improved while preventing an increase in weight of a divided type caliper body which is a piston facing type.

Since the turn-out side body portion and the turn-in side body portion of the action portion are each provided with the vehicle body attachment portion, and the vehicle body attachment portion includes the bolt insertion hole in the disc radial direction through which the vehicle body attachment bolt is inserted, the rigidity can be improved while preventing an increase in weight of a radial mount type caliper body.

Since the action portion is provided with the vehicle body attachment portion, and the vehicle body attachment portion includes the bolt insertion hole in the disc axial direction through which the vehicle body attachment bolt is inserted, the rigidity can be improved while preventing an increase in weight of an axial mount type caliper body.

### Brief Description of Drawings

[FIG. 1] FIG. 1 is a front view of a vehicular disc brake showing an embodiment of the invention.
[FIG. 2] FIG. 2 is a rear view of the same vehicular disc brake.
[FIG. 3] FIG. 3 is a plan view of the same vehicular disc brake.
[FIG. 4] FIG. 4 is a side view of the same vehicular disc brake.
[FIG. 5] FIG. 5 is a cross-sectional view taken along a line V-V in FIG. 4.
[FIG. 6] FIG. 6 is a cross-sectional view taken along a line VI-VI in FIG. 1.
[FIG. 7] FIG. 7 is a cross-sectional view taken along a line VII-VII in FIG. 1.
[FIG. 8] FIG. 8 is a view illustrating a case where friction pads and a pad spring are assembled to a caliper body.
[FIG. 9] FIG. 9 is a perspective view of the pad spring.

### Description of Embodiments

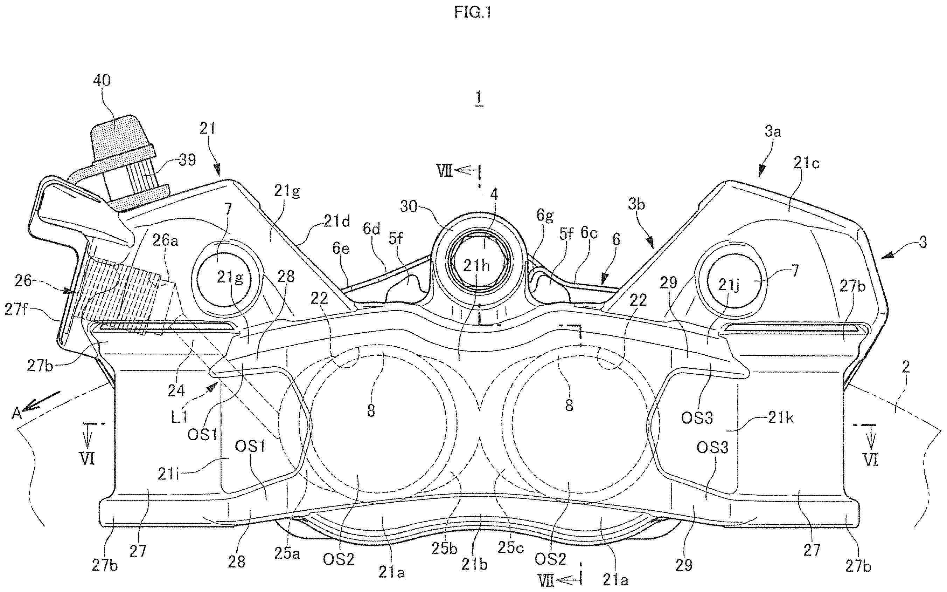

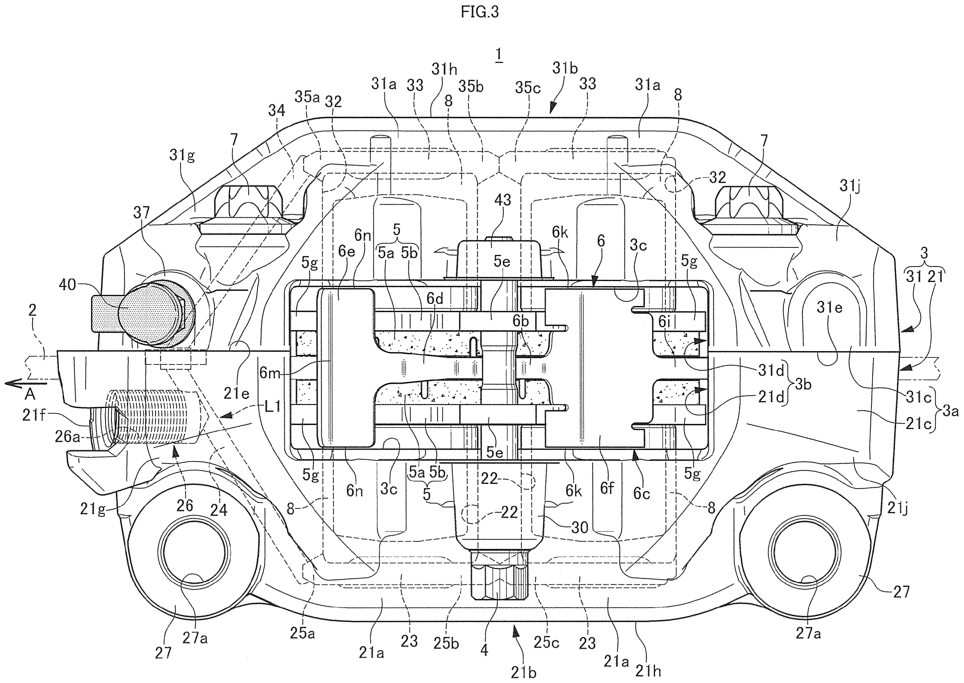

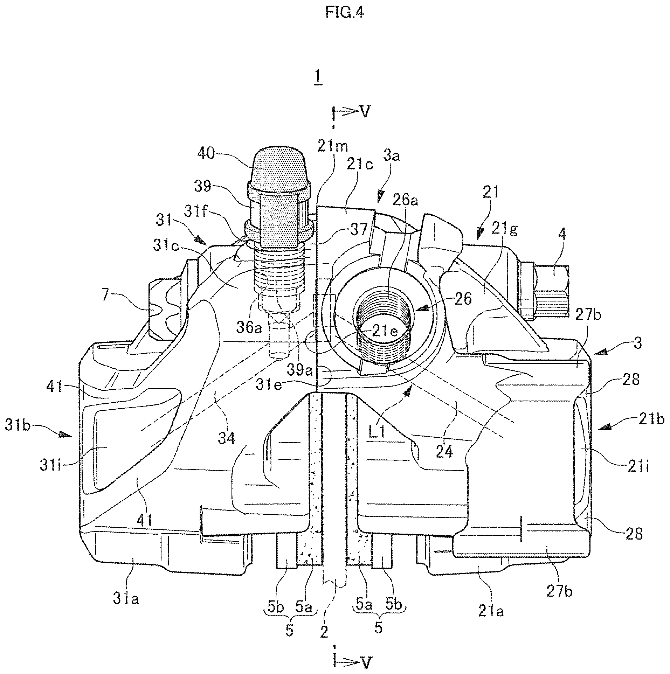

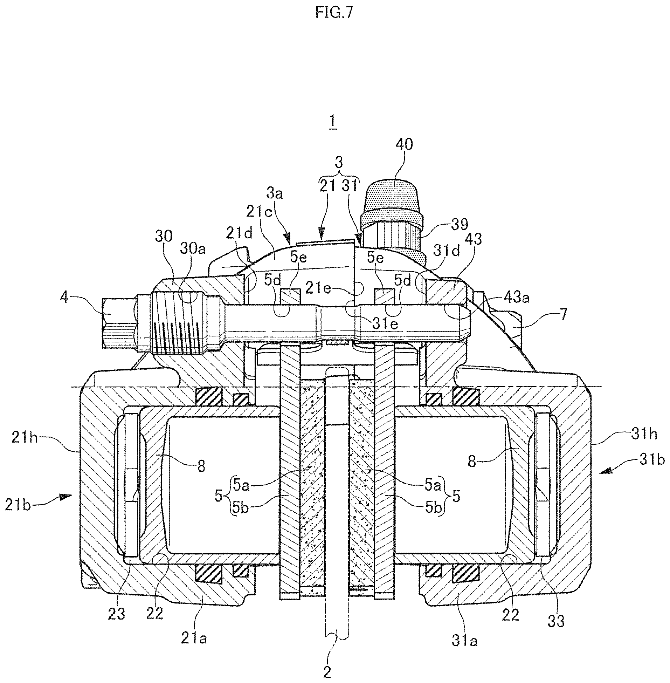

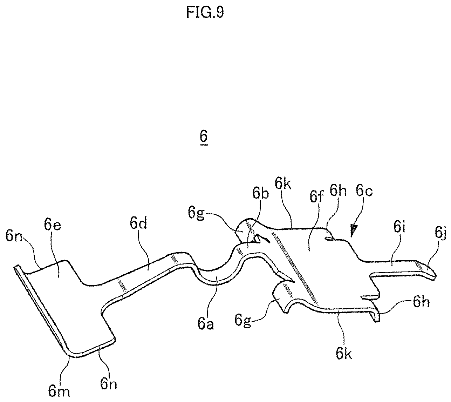

FIGS. 1 to 9 are views showing an embodiment of a vehicular disc brake of the invention, in which an arrow A indicates a rotation direction of a disc rotor that rotates integrally with wheels when a vehicle is moving forward, and a disc turn-out side and a disc turn-in side to be described later indicate those when the vehicle is moving forward.

A vehicular disc brake 1 includes: a disc rotor 2 that rotates integrally with wheels (not shown) in an arrow A direction; a caliper body 3 attached to a vehicle body on one side of the disc rotor 2; and a pair of friction pads 5, 5 that are arranged inside the caliper body 3 so as to face each other with the disc rotor 2 interposed therebetween and are suspended by a hanger pin 4. A pad spring 6 that prevents rattling of the friction pads 5, 5 abuts against the friction pads 5, 5.

The caliper body 3 is a divided type caliper body which is a radial mount type, is divided at a bridge portion 3a straddling an outer peripheral side of the disc rotor 2, and is formed by integrally coupling, with two coupling bolts 7, 7, an opposing-vehicle-body-side caliper half body 21 (caliper half body of the invention) and a vehicle-body-side caliper half body 31 (caliper half body of the invention). In addition, a rectangular ceiling opening portion 3b including wall portions 3c, 3c parallel to the disc rotor 2 and wall portions 3d, 3d parallel to a disc axis is formed in a central portion of the bridge portion 3a in a disc circumferential direction.

The opposing-vehicle-body-side caliper half body 21 includes an action portion 21b in which cylinder portions 21a, 21a each having a cylinder hole 22 into which a piston 8 is inserted are arranged side by side in the disc circumferential direction, and a bridge portion half body 21c constituting substantially half of the bridge portion 3a, and the vehicle-body-side caliper half body 31 also includes an action portion 31b in which cylinder portions 31a, 31a each having a cylinder hole 32 into which the piston 8 is inserted are arranged side by side in the disc circumferential direction, and a bridge portion half body 31c constituting substantially half of the bridge portion 3a, similar to the opposing-vehicle-body-side caliper half body 21. In addition, an opposing-vehicle-body-side ceiling opening portion 21d and a vehicle-body-side ceiling opening portion 31d, which constitute substantially half of the ceiling opening portion 3b, are formed in the bridge portion half body 21c and the bridge portion half body 31c, respectively.

In the opposing-vehicle-body-side caliper half body 21, hydraulic pressure chambers 23, 23 to which a working fluid is introduced are defined between bottom portion sides of the cylinder holes 22, 22 and the pistons 8, 8. In addition, a first working fluid introduction hole 24 is drilled from a disc turn-out side of a divided surface 21e serving as a bonding surface of the bridge portion half body 21c toward the hydraulic pressure chamber 23 on the disc turn-out side, and a part of a bottom of the cylinder hole 22 on the disc turn-out side includes a first contouring machining portion 25a that allows the hydraulic pressure chamber 23 on the disc turn-out side and the first working fluid introduction hole 24 to communicate with each other by a contouring process, and a second contouring machining portion 25b that is contoured toward the hydraulic pressure chamber 23 on the disc turn-in side. Further, a part of a bottom of the cylinder hole 22 on the disc turn-in side includes a third contouring machining portion 25c that is contoured toward the second contouring machining portion 25b. The second contouring machining portion 25b and the third contouring machining portion 25c communicate with each other, whereby the first working fluid introduction hole 24, the hydraulic pressure chamber 23 on the disc turn-out side, and the hydraulic pressure chamber 23 on the disc turn-in side communicate with one another.

In addition, a union hole 26 opening to a disc turn-out side surface 21f of the bridge portion half body 21c and the first working fluid introduction hole 24 is provided on the disc turn-out side of the bridge portion half body 21c, and a female screw portion 26a into which a union bolt (not shown) is screwed is formed on an opening side of the union hole 26. In addition, radial mount type vehicle body attachment portions 27, 27 are formed on the disc turn-in side and the disc turn-out side of the opposing-vehicle-body-side caliper half body 21, attachment bolt insertion holes 27a, 27a in a disc radial direction are formed in the vehicle body attachment portions 27, 27, and the caliper body 3 is attached on a vehicle body by screwing attachment bolts inserted into the attachment bolt insertion holes 27a, 27a to caliper attachment portions provided on the vehicle body side. In addition, large-diameter flange portions 27b, 27b for reinforcement are formed at an outer end portion in the disc radial direction and an inner end portion in the disc radial direction of each vehicle body attachment portion 27, respectively.

The action portion 21b of the opposing-vehicle-body-side caliper half body 21 includes the cylinder portions 21a, 21a having the cylinder holes 22, 22, a turn-out side body portion 21g extending from the cylinder portion 21a on the disc turn-out side to the disc turn-out side, and a turn-in side body portion 21j extending from the cylinder portion 21a on the disc turn-in side to the disc turn-in side. A pair of first reinforcing ribs 28, 28 (disc turn-out side reinforcing ribs of the invention) are provided on the disc radial outer side and the disc radial inner side of an opposing disc rotor side surface 21h of the turn-out side body portion 21g, and the first reinforcing rib 28 on the disc radial outer side connects the cylinder portion 21a on the disc turn-out side and the large-diameter flange portion 27b on the disc radial outer side of the vehicle body attachment portion 27 on the disc turn-out side. In addition, the first reinforcing rib 28 on the disc radial inner side connects the cylinder portion 21a on the disc turn-out side and the large-diameter flange portion 27b on the disc radial inner side of the vehicle body attachment portion 27 on the disc turn-out side. Further, a first thinning portion 21i serving as a thin-walled portion is formed, by casting, on the opposing disc rotor side surface 21h between the first reinforcing ribs 28, 28.

A pair of second reinforcing ribs 29, 29 (disc turn-in side reinforcing ribs of the invention) are provided on the disc radial outer side and the disc radial inner side of the opposing disc rotor side surface 21h of the turn-in side body portion 21j, and the second reinforcing rib 29 on the disc radial outer side connects the cylinder portion 21a on the disc turn-in side and the large-diameter flange portion 27b on the disc radial outer side of the vehicle body attachment portion 27 on the disc turn-in side. In addition, the second reinforcing rib 29 on the disc radial inner side connects the cylinder portion 21a on the disc turn-in side and the large-diameter flange portion 27b on the disc radial inner side of the vehicle body attachment portion 27 on the disc turn-in side. Further, a second thinning portion 21k serving as a thin-walled portion is formed, by casting, on the opposing disc rotor side surface 21h between the second reinforcing ribs 29, 29.

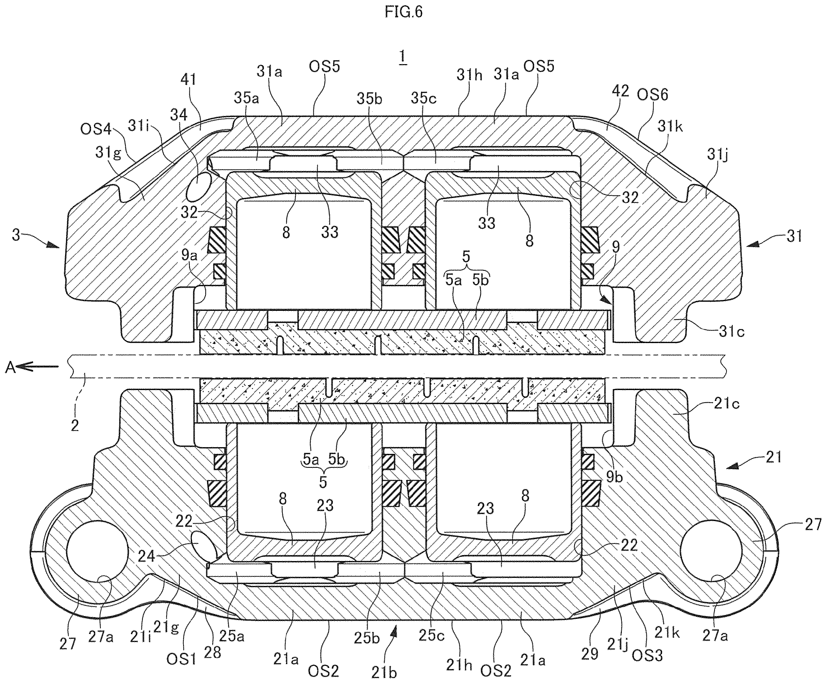

As shown in FIGS. 1 and 6, an outer surface (opposing disc rotor side surface) OS1 of each first reinforcing rib 28 is formed to be gradually inclined toward a disc rotor side toward the disc turn-out side than an outer surface OS2 (opposing disc rotor side surface) of the cylinder portion 21a, and similarly, an outer surface (opposing disc rotor side surface) OS3 of each second reinforcing rib 29 is also formed to be gradually inclined toward the disc rotor side toward the disc turn-in side than the outer surface OS2 (opposing disc rotor side surface) of the cylinder portion 21a.

An attachment boss portion 30 having a pin insertion hole 30a through which the hanger pin 4 is inserted is formed in the central portion in the disc circumferential direction on the disc radial outer side surface of the action portion 21b.

In the vehicle-body-side caliper half body 31, hydraulic pressure chambers 33, 33 to which a working fluid is introduced are defined between bottom portion sides of the cylinder holes 32, 32 and the pistons 8, 8. In addition, a second working fluid introduction hole 34 is drilled from the disc turn-out side of a divided surface 31e serving as a bonding surface of the bridge portion half body 31c toward the hydraulic pressure chamber 33 on the disc turn-out side, and the first working fluid introduction hole 24 and the second working fluid introduction hole 34 communicate with each other by the divided surfaces 21e, 31e. A part of the bottom of the cylinder hole 32 on the disc turn-out side includes a fourth contouring machining portion 35a that allows the hydraulic pressure chamber 33 on the disc turn-out side and the second working fluid introduction hole 34 to communicate with each other by a contouring process, and a fifth contouring machining portion 35b that is contoured toward the hydraulic pressure chamber 33 on the disc turn-in side. Further, a part of the bottom of the cylinder hole 32 on the disc turn-in side includes a sixth contouring machining portion 35c that is contoured toward the fifth contouring machining portion 35b. The fifth contouring machining portion 35b and the sixth contouring machining portion 35c communicate with each other, whereby the second working fluid introduction hole 34, the hydraulic pressure chamber 33 on the disc turn-out side, and the hydraulic pressure chamber 33 on the disc turn-in side communicate with one another.

A bleeder portion 37 having a bleeder hole 36 opening to a disc radial outer side surface 31f and the second working fluid introduction hole 34 is provided on the disc turn-out side of the bridge portion half body 31c.

A female screw portion 36a into which a bleeder screw 39 is screwed is formed on an opening side of the bleeder hole 36, the bleeder screw 39 is provided with an air discharge hole (not shown) on an inner peripheral portion thereof and a male screw portion 39a on an outer peripheral portion thereof, which is screwed into the female screw portion 36a, and a rubber bleeder cap 40 is covered to a tip end head portion thereof.

The action portion 31b of the vehicle-body-side caliper half body 31 includes the cylinder portions 31a, 31a having the cylinder holes 32, 32, a turn-out side body portion 31g extending from the cylinder portion 31a on the disc turn-out side to the disc turn-out side, and a turn-in side body portion 31j extending from the cylinder portion 31a on the disc turn-in side to the disc turn-in side. A pair of third reinforcing ribs 41, 41 (disc turn-out side reinforcing ribs of the invention) are provided on the disc radial outer side and the disc radial inner side of an opposing disc rotor side surface 31h of the turn-out side body portion 31g, and the third reinforcing rib 41 on the disc radial outer side connects the cylinder portion 31a on the disc turn-out side and an end portion on the disc turn-out side of the turn-out side body portion 31g. In addition, the third reinforcing rib 41 on the disc radial inner side connects the cylinder portion 31a on the disc turn-out side and a disc turn-out side of the third reinforcing rib 41 on the disc radial outer side. Further, a third thinning portion 31i serving as a thin-walled portion is formed, by casting, on the opposing disc rotor side surface 31h between the third reinforcing ribs 41, 41.

Further, a pair of fourth reinforcing ribs 42, 42 (disc turn-in side reinforcing ribs of the invention) are provided on the disc radial outer side and the disc radial inner side of the opposing disc rotor side surface 31h of the turn-in side body portion 31j, and the fourth reinforcing rib 42 on the disc radial outer side connects the cylinder portion 31a on the disc turn-in side and an end portion on the disc turn-in side of the turn-in side body portion 31j. In addition, the fourth reinforcing rib 42 on the disc radial inner side connects the cylinder portion 31a on the disc turn-in side and a disc rotor turn-in side of the fourth reinforcing rib 42 on the disc radial outer side. Further, a fourth thinning portion 31k serving as a thin-walled portion is formed, by casting, on the opposing disc rotor side surface 31h between the fourth reinforcing ribs 42, 42.

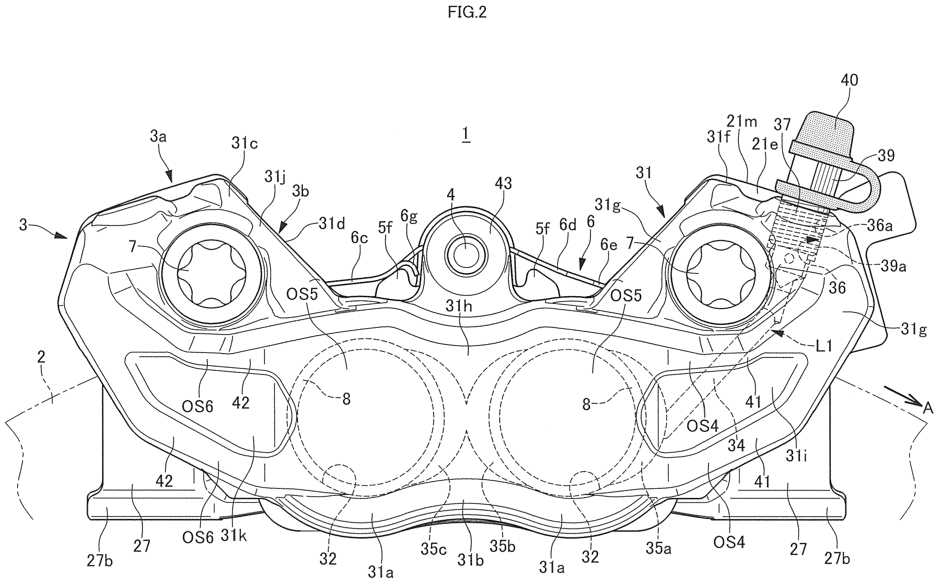

As shown in FIGS. 2 and 6, an outer surface (opposing disc rotor side surface) OS4 of each third reinforcing rib 41 is formed to be gradually inclined toward a disc rotor side toward the disc turn-out side than an outer surface OS5 (opposing disc rotor side surface) of the cylinder portion 31a, and similarly, an outer surface (opposing disc rotor side surface) OS6 of each fourth reinforcing rib 42 is also formed to be gradually inclined toward the disc rotor side toward the disc turn-in side than the outer surface OS5 (opposing disc rotor side surface) of the cylinder portion 31a.

An attachment boss portion 43 having a pin insertion hole 43a through which the hanger pin 4 is inserted is formed in the central portion in the disc circumferential direction on the disc radial outer side surface of the action portion 31b so as to face the attachment boss portion 30 of the opposing-vehicle-body-side caliper half body 21.

The caliper body 3 is formed by bonding the opposing-vehicle-body-side caliper half body 21 and the vehicle-body-side caliper half body 31, which are formed as described above, to each other at the bridge portion 3a with the divided surfaces 21e, 31e abutting against each other, and coupling the opposing-vehicle-body-side caliper half body 21 and the vehicle-body-side caliper half body 31 with the coupling bolts 7, 7. Further, by coupling the opposing-vehicle-body-side caliper half body 21 and the vehicle-body-side caliper half body 31, the first working fluid introduction hole 24 and the second working fluid introduction hole 34 communicate with each other, and accordingly, the first working fluid introduction hole 24, the second working fluid introduction hole 34, each hydraulic pressure chamber 23 of the opposing-vehicle-body-side caliper half body 21, and each hydraulic pressure chamber 33 of the vehicle-body-side caliper half body 31 communicate with each other, and thus, a fluid passage L1 is formed. In addition, since the union hole 26 communicates with the first working fluid introduction hole 24, a working fluid is supplied to the fluid passage L1 through the union hole 26. Further, since the bleeder hole 36 communicates with the second working fluid introduction hole 34, air mixed in the working fluid introduced into the fluid passage L1 is discharged to the outside through the bleeder screw 39.

A friction pad accommodating portion 9 that accommodates the friction pads 5 is formed in the turn-out side body portions 21g, 31g and the turn-in side body portions 21j, 31j. A disc turn-out side wall 9a of the friction pad accommodating portion 9 formed in the turn-out side body portions 21g, 31g and a disc turn-in side wall 9b of the friction pad accommodating portion 9 formed in the turn-in side body portions 21j, 31j are torque receiving portions that receive torque by abutting against the friction pads 5, 5 during braking, and further, a locking groove 9c that locks the pad spring 6 is formed in the disc turn-in side wall 9b.

Each friction pad 5 includes a lining 5a which is in sliding contact with a side surface of the disc rotor 2, and a metal back plate 5b to which the lining 5a is adhered. In the back plate 5b, a suspension piece 5e having a hanger pin insertion hole 5d through which the hanger pin 4 is inserted is provided to protrude from a central portion of a disc radial outer side surface 5c, and a pair of first pad spring abutting portions 5f, 5f against which the pad spring 6 abuts are provided adjacent to a disc turn-out side and a disc turn-in side of the suspension piece 5e. Further, a pair of second pad spring abutting portions 5g, 5g are provided to protrude from an end portion on the disc turn-out side and an end portion on the disc turn-in side of the disc radial outer side surface 5c, and the suspension piece 5e, the first pad spring abutting portions 5f, 5f, and the second pad spring abutting portions 5g, 5g are provided in parallel in a disc circumferential direction of the disc radial outer side surface 5c, respectively.

The hanger pin 4 is inserted into the pin insertion holes 30a, 43a of the attachment boss portions 30, 43, respectively, is installed in the disc axial direction through the ceiling opening portion 3b of the caliper body 3, is inserted into the hanger pin insertion holes 5d, 5d of the suspension pieces 5e, 5e provided on the friction pad 5, and suspends the friction pads 5, 5 movably in the disc axial direction in a state where the friction pads 5, 5 are accommodated in the friction pad accommodating portion 9. In addition, the pad spring 6 is provided over the back plate 5b and the hanger pin 4, and the friction pads 5, 5 are pressed toward the disc radial inner side and the disc turn-out side.

The pad spring 6 is formed by bending a single plate material punched into a predetermined shape, and includes: an arc-shaped hanger pin abutting portion 6a that abuts against an outer peripheral surface of the hanger pin 4 on the disc radial inner side; a first elastic portion 6c that extends from the hanger pin abutting portion 6a to the disc turn-in side via a strip-shaped first spring piece 6b and abuts against the first pad spring abutting portion 5f on the disc turn-in side and the second pad spring abutting portion 5g on the disc turn-in side of the friction pads 5, 5; and a second elastic portion 6e that extends from the hanger pin abutting portion 6a to the disc turn-out side via a strip-shaped second spring piece 6d and abuts against the second pad spring abutting portion 5g on the disc turn-out side of the friction pads 5, 5.

The first elastic portion 6c includes: a first elastic piece 6f that abuts against the first pad spring abutting portion 5f on the disc turn-in side of the friction pad 5 to elastically push the friction pads 5, 5 toward the disc radial inner side and a disc rotor turn-out side; first positioning pieces 6g, 6g and second positioning pieces 6h, 6h that abut against the friction pads 5, 5 to determine positioning of the pad spring 6 when the friction pads 5, 5 and the pad spring 6 are assembled to the caliper body 3; and a locking piece 6i locked in the locking groove 9c.

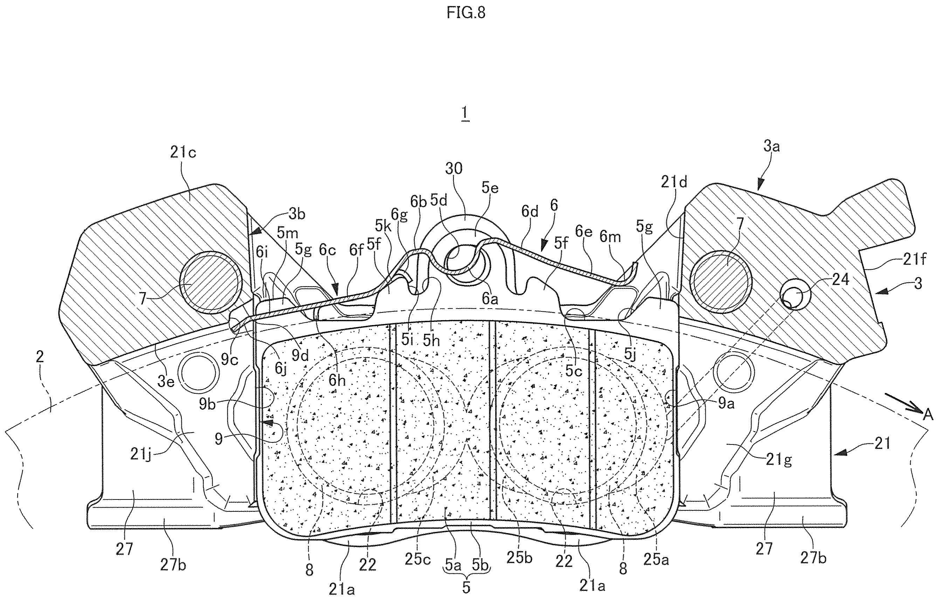

The first positioning pieces 6g, 6g and the second positioning pieces 6h, 6h are formed by cutting and raising a part of the first elastic piece 6f and bending the first elastic piece 6f toward the disc radial inner side in an arc shape. As shown in FIG. 8, when the friction pads 5, 5 and the pad spring 6 are assembled to the caliper body 3, the first positioning pieces 6g, 6g are inserted into recessed portions 5h, 5h (space portions) formed between the suspension pieces 5e, 5e and the first pad spring abutting portions 5f, 5f on the disc turn-in side, that is, the first positioning pieces 6g, 6g are accommodated in the recessed portions 5h, 5h, tip ends of the first positioning pieces 6g, 6g abut against the disc turn-out side surfaces 5i, 5i of the first pad spring abutting portions 5f, 5f, and the second positioning pieces 6h, 6h abut against the disc radial outer side surfaces 5c of the back plates 5b in the vicinity of the second pad spring abutting portions 5g, 5g on the disc turn-in side.

In addition, the locking piece 6i protrudes to the disc turn-in side from a central portion in a disc axial direction of an end portion on a disc turn-in side of the first elastic piece 6f, and a tip end portion 6j thereof is inserted into the locking groove 9c. Further, the first elastic piece 6f is formed to have a wide width in the disc axial direction, and end surfaces 6k, 6k thereof on an opposing disc rotor side abut against the wall portions 3c, 3c of the ceiling opening portion 3b, respectively.

The second elastic portion 6e is formed by bending the disc turn-out side into the disc radial outer side in an arc shape, and abuts a bent portion 6m against the disc turn-in side surfaces 5j, 5j of the second pad spring abutting portions 5g, 5g on the disc turn-out side. Further, the second elastic portion 6e is formed to have a wide width in the disc axial direction, and end surfaces 6n, 6n (a second preventing portion of the invention) thereof on the opposing disc rotor side abut against the wall portions 3c, 3c of the ceiling opening portion 3b. In addition, the wall portions 3c, 3c on the opposing disc rotor side of the ceiling opening portion 3b against which the end surfaces 6k, 6k, 6n, 6n abut are formed by a casting surface, respectively. In addition, a disc radial outer side surface 9d of the locking groove 9c is formed on the disc radial outer side than an accommodating groove 3e of the disc rotor 2 formed on a disc rotor side surface of the bridge portion 3a.

When the friction pads 5, 5 and the pad spring 6, which are formed as described above, are assembled to the caliper body 3, first, as shown in FIG. 8, the friction pads 5, 5 are arranged in the friction pad accommodating portion 9, the pad spring 6 is arranged on the disc radial outer side of the friction pads 5, 5, and the tip end portion 6j of the locking piece 6i is locked to the locking groove 9c.

At this time, the first positioning pieces 6g, 6g are inserted into the recessed portions 5h, 5h formed between the suspension pieces 5e, 5e and the first pad spring abutting portions 5f, 5f on the disc turn-in side, the tip ends thereof abut against the disc turn-out side surfaces 5i, 5i of the first pad spring abutting portions 5f, 5f, and the second positioning pieces 6h, 6h abut against the disc radial outer side surfaces 5c, 5c in the vicinity of the second pad spring abutting portions 5g, 5g on the disc turn-in side, and are in a state where the pad spring 6 is positioned with respect to the friction pads 5, 5.

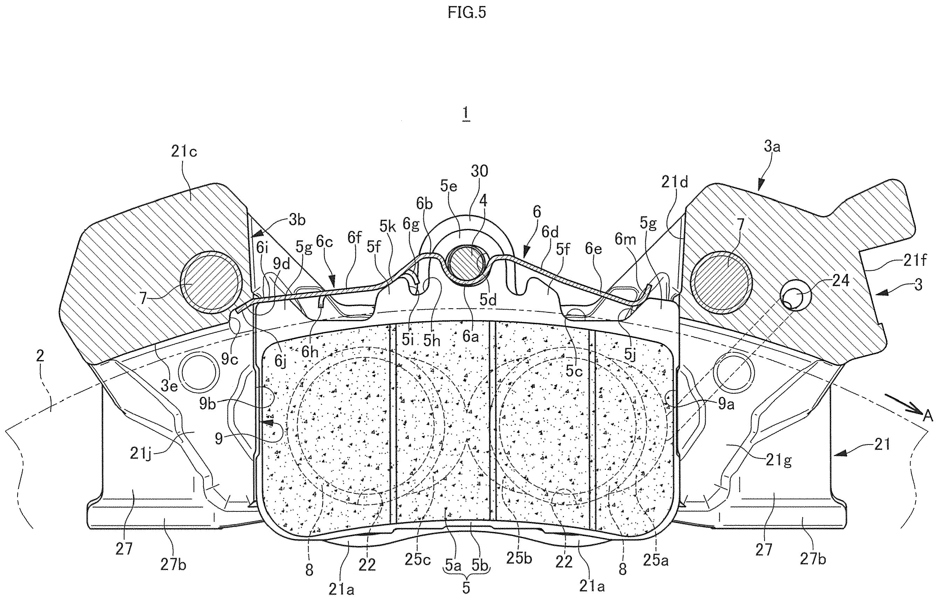

Next, the hanger pin 4 is inserted throughout the pin insertion hole 30a of the attachment boss portion 30 of the opposing-vehicle-body-side caliper half body 21, the pin insertion hole 43a of the attachment boss portion 43 of the vehicle-body-side caliper half body 31, and the hanger pin insertion holes 5d, 5d of the suspension pieces 5e, 5e provided on the friction pads 5, 5, and the friction pads 5, 5 are suspended by the hanger pin 4 so as to be movable in the disc axial direction. In addition, an outer peripheral surface on a disc radial inner side of the hanger pin 4 abuts against the hanger pin abutting portion 6a of the pad spring 6 to press the pad spring 6, whereby the pad spring 6 is arranged at a set normal position shown in FIG. 5.

In the pad spring 6 arranged at the normal position, the outer peripheral surface on the disc radial inner side of the hanger pin 4 abuts against the hanger pin abutting portion 6a of the pad spring 6, and the tip end portion 6j of the locking piece 6i is locked to the locking groove 9c. The first elastic piece 6f of the first elastic portions 6c abuts against disc radial outer side surfaces 5k, 5k of the first pad spring abutting portions 5f, 5f on the disc turn-in side of the friction pads 5, 5. Since the disc radial outer side surfaces 5k, 5k are formed to be gradually inclined toward the disc rotor side from the disc turn-out side toward the disc turn-in side, the first pad spring abutting portions 5f, 5f elastically push the friction pads 5, 5 toward the disc radial inner side and the disc turn-out side. The bent portion 6m of the second elastic portion 6e abuts against the disc turn-in side surfaces 5j, 5j of the second pad spring abutting portions 5g, 5g on the disc turn-out side of the friction pads 5, 5, and the second elastic portion 6e elastically push the friction pads 5, 5 toward the disc radial inner side and the disc turn-out side. Further, the end surfaces 6k, 6k, 6n, 6n abut against the wall portions 3c, 3c on the opposing disc rotor side of the ceiling opening portion 3b.

In the caliper body 3 of the present embodiment, as described above, since the first reinforcing ribs 28, 28, the second reinforcing ribs 29, 29, the third reinforcing ribs 41, 41, and the fourth reinforcing ribs 42, 42 are provided in the caliper body 3, and the first thinning portion 21i, the second thinning portion 21k, the third thinning portion 31i, and the fourth thinning portion 31k serving as thin-walled portions are provided between the reinforcing ribs, the rigidity of the caliper body 3 can be improved while reducing a weight of the caliper body 3 as much as possible and preventing an increase in weight, and the cylinder portions 21a, 31a can be prevented from swelling out to the opposing disc rotor side during braking.

Further, since the outer surface OS1 of the first reinforcing rib 28 is formed to be gradually inclined toward the disc rotor side toward the disc turn-out side than the outer surface OS2 of the cylinder portion 21a, the outer surface OS3 of the second reinforcing rib 29 is formed to be gradually inclined toward the disc rotor side toward the disc turn-in side than the outer surface OS2 of the cylinder portion 21a, the outer surface OS4 of the third reinforcing rib 41 is formed to be gradually inclined toward the disc rotor side toward the disc turn-out side than the outer surface OS5 of the cylinder portion 31a, and the outer surface OS6 of the fourth reinforcing rib 42 is formed to be gradually inclined toward the disc rotor side toward the disc turn-in side than the outer surface OS5 of the cylinder portion 31a, the rigidity can be ensured while reducing the weight without increasing a size of the caliper body 3.

The invention is not limited to being applied to the divided type caliper body, and can also be applied to a monocoque type caliper body. In addition, an opposing disc rotor side surface of a reinforcing rib formed on a caliper body may be formed on the same plane as an opposing disc rotor side surface of a cylinder portion. Further, the number of pistons and a configuration of a fluid passage are freely set. In addition, the caliper body may be an axial mount type caliper body having an attachment bolt insertion hole in a disc axial direction in a vehicle body attachment portion without any problem. Further, as in the present embodiment, the invention is not limited to being applied to a caliper body of a piston facing type disc brake, and can also be applied to a caliper body of a pin slide type disc brake in which an action portion including a piston and a reaction portion including a reaction force claw are provided on both side portions of a disc rotor.

### Reference Signs List

1 vehicular disc brake; 2 disc rotor; 3 caliper body; 3a bridge portion; 3b ceiling opening portion; 3c, 3d wall portion; 3e accommodating groove; 4 hanger pin; 5 friction pad; 5a lining; 5b back plate; 5c disc radial outer side surface; 5d hanger pin insertion hole; 5e suspension piece; 5f first pad spring abutting portion; 5g second pad spring abutting portion; 5h recessed portion; 5i disc turn-out side surface; 5j disc turn-in side surface; 5k disc radial outer side surface; 6 pad spring; 6a hanger pin abutting portion; 6b first spring piece; 6c first elastic portion; 6d second spring piece; 6e second elastic portion; 6f first elastic piece; 6g first positioning piece; 6h second positioning piece; 6i locking piece; 6j tip end portion; 6m bent portion; 6k, 6n end surface; 7 coupling bolt; 8 piston; 9 friction pad accommodating portion; 9a disc turn-out side wall; 9b disc turn-in side wall; 9c locking groove; 21 opposing-vehicle-body-side caliper half body; 21a cylinder portion; 21b action portion; 21c bridge portion half body; 21d ceiling opening portion half body; 21e divided surface; 21f disc turn-out side surface; 21g turn-out side body portion; 21h opposing disc rotor side surface; 21i first thinning portion; 21j turn-in side body portion; 21k second thinning portion; 21m disc radial outer side surface; 22 cylinder hole; 23 hydraulic pressure chamber; 24 first working fluid introduction hole; 25a first contouring machining portion; 25b second contouring machining portion; 25c third contouring machining portion; 26 union hole; 26a female screw portion; 27 vehicle body attachment portion; 27a attachment bolt insertion hole; 28 first reinforcing rib; 29 second reinforcing rib; 30 attachment boss portion; 30a pin insertion hole; 31 vehicle-body-side caliper half body; 31a cylinder portion; 31b action portion; 31c bridge portion half body; 31d ceiling opening portion half body; 31e divided surface; 31f disc radial outer side surface; 31g turn-out side body portion; 31h opposing disc rotor side surface; 31i third thinning portion; 31j turn-in side body portion; 31k fourth thinning portion; 32 cylinder hole; 33 hydraulic pressure chamber; 34 second working fluid introduction hole; 35a fourth contouring machining portion; 35b fifth contouring machining portion; 35c sixth contouring machining portion; 36 bleeder hole; 36a female screw portion; 37 bleeder portion; 39 bleeder screw; 39a male screw portion; 40 bleeder cap; 41 third reinforcing rib; 42 fourth reinforcing rib; 43 attachment boss portion; 43a pin insertion hole

## Claims

1. A caliper body for a vehicular disc brake, the caliper body being provided across an outer periphery of a disc rotor, and comprising an action portion including a cylinder portion into which a piston is inserted, the action portion being arranged on a side portion of the disc rotor, wherein
the action portion includes a turn-out side body portion extending from the cylinder portion to a disc turn-out side when a vehicle is moving forward, and a turn-in side body portion extending from the cylinder portion to a disc turn-in side when the vehicle is moving forward,
a pair of disc turn-out side reinforcing ribs extending from a side of the cylinder portion to the disc turn-out side are provided on a disc radial outer side and a disc radial inner side of an opposing disc rotor side surface of the turn-out side body portion,
a pair of disc turn-in side reinforcing ribs extending from the side of the cylinder portion to the disc turn-in side are provided on a disc radial outer side and a disc radial inner side of an opposing disc rotor side surface of the turn-in side body portion, and
thin-walled portions are provided on the opposing disc rotor side surface between the pair of disc turn-out side reinforcing ribs and on the opposing disc rotor side surface between the pair of disc turn-in side reinforcing ribs, respectively.

2. The caliper body for a vehicular disc brake according to claim 1, wherein
the disc turn-out side reinforcing rib and the disc turn-in side reinforcing rib are formed continuously to the cylinder portion, and an opposing disc rotor side surface of the disc turn-out side reinforcing rib and an opposing disc rotor side surface of the disc turn-in side reinforcing rib are formed on the same plane as an opposing disc rotor side surface of the cylinder portion or formed closer to a disc rotor side than the opposing disc rotor side surface of the cylinder portion.

3. The caliper body for a vehicular disc brake according to claim 1 or 2, wherein
the caliper body is formed by coupling, by a bridge portion straddling an outer periphery of the disc rotor, a pair of the action portions arranged on both side portions of the disc rotor.

4. The caliper body for a vehicular disc brake according to any one of claims 1 to 3, wherein
the turn-out side body portion and the turn-in side body portion of the action portion are each provided with a vehicle body attachment portion, and the vehicle body attachment portion includes a bolt insertion hole in a disc radial direction through which a vehicle body attachment bolt is inserted.

5. The caliper body for a vehicular disc brake according to any one of claims 1 to 3, wherein
the action portion is provided with a vehicle body attachment portion, and the vehicle body attachment portion includes a bolt insertion hole in a disc axial direction through which a vehicle body attachment bolt is inserted.
